# EUROPÄISCHE PATENTSCHRIFT

(11) **EP 3 700 042 B1**
(45) Veröffentlichungstag und Bekanntmachung des Hinweises auf die Patenterteilung: **03.04.2024**
(21) Anmeldenummer: 20155283.3
(22) Anmeldetag: 04.02.2020
(51) Int. Cl.: H02J 3/32

(54) **SYSTEM ZUM BETREIBEN EINES ENERGIESPEICHERS**
SYSTEM FOR OPERATING OF AN ENERGY STORAGE
SYSTÈME D'EXPLOITATION D'UN STOCKAGE D'ÉNERGIE

(30) Priorität: 20.02.2019 DE 102019104243
(43) Veröffentlichungstag der Anmeldung: 26.08.2020
(73) Patentinhaber: Innogy SE, 45128 Essen (DE)
(72) Erfinder: Gaul, Armin, 59379 Selm (DE); Hammerschmidt, Torsten, 44267 Dortmund (DE)
(74) Vertreter: Cohausz & Florack

(56) Entgegenhaltungen:
- WO-A1-2018/206114
- DE-A1-102015 109 113
- DE-A1-102016 111 339
- DE-A1-102017 102 739

## Beschreibung

Der Gegenstand betrifft ein System sowie ein Verfahren zum Betreiben eines Energiespeichers.

Private als auch gewerbliche Betreiber von Photovoltaikanlagen speisen derzeit große Teile des eigen produzierten Stroms in das Energieversorgungsnetz ein. Hierfür erhalten die Betreiber (Teilnehmer) sogenannte Einspeiseentgelte. Die Höhe der Einspeiseentgelte ist in den letzten Jahren rapide gesunken, so dass für die Betreiber der Photovoltaikanlagen der Eigenverbrauch wirtschaftlich immer interessanter wird. Heutzutage ist die Vergütung für die Einspeisung geringer, als die Kosten für eine Entnahme elektrischer Energie aus dem Energieversorgungsnetz. Bei Einspeiseentgelten von ca. 12 ct/kWh und Kosten von ca. 30 ct/kWh ergibt sich eine Marge von 18 ct/kWh bei einem Eigenverbrauch des eigen produzierten Stroms aus der Photovoltaikanlage.

Das beschriebene gilt jedoch nicht nur für Photovoltaikanlagen, sondern auch für andere Erzeugungsanlagen zur Erzeugung elektrischer Energie, beispielsweise Windkraftanlagen, Biomasseanlagen, KWK-Anlagen oder dergleichen. Bei allen Anlagen ist zu überlegen, ob der selbst produzierte Strom eigenverbraucht wird oder ins Energieversorgungsnetz eingespeist wird.

Wenn nachfolgend von produziertem Strom die Rede ist, so ist hiermit der aufgrund der Erzeugung/Wandlung elektrischer Energie aus anderen Energieträgern, wie Sonnenlicht, Kraft-Wärme-Kopplung, Windkraft, Biomasse oder dergleichen fließende Strom gemeint. Wenn nachfolgend von Energieerzeugung die Rede ist, so ist hiermit die Erzeugung/Wandlung elektrischer Energie aus anderen Energieträgern, wie Sonnenlicht, Kraft-Wärme-Kopplung, Windkraft, Biomasse oder dergleichen gemeint. Wenn nachfolgend von Grünstrom die Rede ist, so ist hiermit der eigen produzierte Strom durch die Erzeugungsanlage gemeint. Wenn nachfolgend von Graustrom die Rede ist, so ist hiermit der aus dem Energieversorgungsnetz bezogene Strom oder mit diesem Strom vermischter Strom gemeint. Der Strom aus dem Verteilnetz stammt teilweise aus regenerativen Quellen. Da er jedoch gemäß des Erzeugungsmixes auch Graustromanteile aus z. B. fossilen Kraftwerken enthält, wird er als Graustrom bezeichnet.

Nachfolgend können die Begriffe Stromfluss und Energiefluss synonym verwendet werden. Insbesondere wird unter der Stromflussrichtung die Energieflussrichtung verstanden, auch wenn physikalisch bei einer zeitlich aufgelösten Betrachtung von Wechselströmen diese Begriffe unterschieden werden. In Berechnungsformeln wird eine frei definierbare Strom- bzw. Energieflussrichtung mit positiven und die entgegengesetzte Flussrichtung mit negativen Werten gekennzeichnet. Wenn vorliegend von Energieflussrichtung oder Stromrichtung bzw. Energie oder Strom die Rede ist, so sind diese Begriffe in der Regel austauschbar verwendbar.

Zur Erhöhung des Eigenverbrauchs eignet sich in der Regel ein elektrischer Energiespeicher, beispielsweise eine Batterie. Dieser wird zu Zeiten geladen, in denen die Erzeugungsanlage mehr elektrische Leistung bereitstellt, als vom Haushalt verbraucht wird. Während Zeiten, in denen der Leistungsbedarf des Haushaltes größer ist als die Leistung der Erzeugungsanlage, kann die Batterie entladen werden.

Die hier erwähnten Zählwerke können mit einer Rücklaufsperre versehen sein. Hierdurch kann sichergestellt werden, dass das jeweilige Zählwerk jeweils nur elektrische Energie misst, die von einer ersten Richtung in eine zweite Richtung fließt und nicht umgekehrt. Bei einem umgekehrten Energiefluss zählen die Zählwerke nicht rückwärts sondern verbleiben bei dem bis dahin gezählten Wert.

Häufig ist es wünschenswert, den Eigenverbrauch zu erhöhen, ohne in der eigenen Hausverteilung einen dezidierten Energiespeicher installieren zu müssen. Kann der Energiespeicher extern der Hausverteilung angeordnet werden, bieten sich Möglichkeiten für externe Anbieter von Energiespeichern, diese den Teilnehmern zur Erhöhung ihres Eigenverbrauchs bereitzustellen. Dem Gegenstand lag die Aufgabe zugrunde, Energieerzeugung und Energiespeicherung räumlich zu trennen, wobei Grünstrom jedoch dezidiert genutzt werden kann. Dokument DE102017102739A1 offenbart ein Energiespeicher-System gemäß dem Oberbegriff von Anspruch 1.

Diese Aufgabe wird durch ein System nach Anspruch 1 sowie ein Verfahren nach Anspruch 13 gelöst.

Ein gegenständlicher Energiespeicher ist über einen Energiespeicheranschluss an ein elektrisches Versorgungsnetz angeschlossen. Dieser Anschluss des Energiespeichers an das elektrische Versorgungsnetz kann bevorzugt in einer gleichen Netzebene angeordnet sein, in der die gegenständliche Energieerzeugung stattfindet. Vorzugsweise kann zwischen dem Energiespeicheranschluss (4) und dem Versorgungsnetzanschluss (8) auch eine höhere Netzebene genutzt werden. Dies ist insbesondere der Fall, in dem der Energiespeicher Teil einer Speicherfarm ist. Sowohl die Energiespeicher wie auch die Erzeugungsanlagen können in höheren oder tieferen und insbesondere in unterschiedlichen Netzebenen angeschlossen sein. Im Rahmen einer Speicherfarm ist es möglich, dezidiert einem oder mehreren Erzeugern/Teilnehmern Energiespeicher zur Verfügung zu stellen, welche zur Eigenverbrauchsoptimierung genutzt werden können, in dem, wie nachfolgend noch beschrieben wird, ein synchronisiertes Einspeichern und Ausspeichern elektrischer Energie ermöglicht wird.

Für eine Synchronisation von Erzeugung und Speicherung bzw. von Nutzung und Ausspeicherung wird vorgeschlagen, dass abhängig von einem externen Steuersignal, die Steuereinrichtung einen Leistungsfluss zwischen dem Energiespeicher und dem Energiespeicheranschluss einstellt. Somit ist es möglich, dass der Energiespeicher getriggert durch ein äußeres Steuersignal, entweder elektrische Energie einspeichert oder elektrische Energie ausspeichert. Durch das Steuersignal ist es möglich, das Einspeichern synchron zu einer Einspeisung elektrischer Energie in das Energieversorgungsnetz aus einer Erzeugungsanlage zu gestalten. Außerdem ist es möglich, die Ausspeisung elektrischer Energie aus dem Energiespeicher synchron zu einer Nutzung elektrischer Energie an einer Last, insbesondere einer, zusammen mit der Erzeugungsanlage bei einem Teilnehmer betriebenen Last, zu gestalten.

Der Energiespeicher ist über einen Umrichter mit dem Energiespeicheranschluss verbunden. Mit Hilfe des Umrichters ist es einerseits möglich, DC/AC- sowie AC/DC-Wandlung durchzuführen. Andererseits kann mit Hilfe des Umrichters die Klemmenspannung ausgangsseitig eingestellt werden, womit beeinflusst werden kann, ob elektrische Energie in den Speicher eingespeichert wird oder elektrische Energie aus dem Speicher ausgespeichert wird. Beim Einspeichern elektrischer Energie in den Energiespeicher, findet ein Leistungsfluss von dem Energiespeicheranschluss zu dem Energiespeicher statt, was dadurch bewirkt werden kann, dass das Spannungsniveau an den Klemmen des Umrichters geringer ist, als die Spannung am Energiespeicheranschluss. Wird die Spannung an den Klemmen des Umrichters höher gewählt als die Spannung am Energiespeicheranschluss, so erfolgt ein Ausspeichern elektrischer Energie aus dem Energiespeicher.

Erfindungsgemäß wird vorgeschlagen, dass zwischen dem Energiespeicheranschluss und dem Energiespeicher eine erste Zähleinrichtung angeordnet ist, welche eine zwischen dem Energiespeicher und dem Energiespeicheranschluss übertragene elektrische Energie misst. Mit Hilfe einer solchen Zähleinrichtung ist es möglich, die bezogene und/oder abgegebene elektrische Energie für den Energiespeicher zu erfassen. Dies ist sinnvoll, um eine Saldierung mit einer Zähleinrichtung an einem Teilnehmer, an dem eine Energieerzeugungsanlage betrieben wird, durchführen zu können, wie nachfolgend noch beschrieben werden wird.

Gemäß einem Ausführungsbeispiel wird vorgeschlagen, dass die erste Zähleinrichtung zumindest zwei Zählmittel aufweist. Als Zählmittel kann beispielsweise ein Zählwerk oder Zählregister oder dergleichen verstanden werden. Ein Zählmittel ist eine Vorrichtung, mit der eine Energiemenge erfasst werden kann. Es wird vorgeschlagen, dass abhängig von dem externen Steuersignal oder abhängig von der Leistungsflussrichtung des eingestellten Leistungsflusses jeweils eines der zumindest zwei Zählmittel aktiviert ist und das jeweils andere Zählmittel deaktiviert wird. Somit ist es möglich, durch die Steuereinrichtung, abhängig von dem externen Steuersignal jeweils eines der Zählmittel zu aktivieren und das andere Zählmittel zu deaktivieren. Auch kann mittelbar abhängig von dem Steuersignal, nämlich durch die eingestellte Leistungsflussrichtung, jeweils eines der Zählmittel aktiviert sein und das andere Zählmittel deaktiviert sein. Dazu kann beispielsweise in der Zähleinrichtung und/oder dem Zählmittel eine Messung der Leistungsflussrichtung vorgenommen werden und nur bei einer zuvor bestimmten Leistungsflussrichtung wird das jeweilige Zählmittel aktiviert. Dabei können die Leistungsflussrichtungen, die zur Aktivierung der jeweiligen Zählmittel bestimmt sind, zueinander entgegengesetzt sein. Das heißt, dass ein erstes Zählmittel nur dann aktiviert ist, wenn elektrische Leistung von dem Energiespeicheranschluss zu dem Energiespeicher übertragen wird und das zweite Zählmittel nur dann aktiviert ist, wenn elektrische Leistung von dem Energiespeicher zu dem Energiespeicheranschluss fließt. Der erste Fall kann mit einem Einspeichern elektrischer Energie gleichgesetzt werden und der zweite Fall kann mit einem Ausspeichern elektrischer Energie gleichgesetzt werden. Hierdurch ist es möglich, zu erfassen, welche Energiemenge in den Energiespeicher eingespeist wurde und welche Energiemenge aus dem Energiespeicher ausgespeist wurde. Auch ist es möglich, die erfassten Energiemengen zeitlich aufgelöst darzustellen, um gegebenenfalls eine spätere zeitliche Saldierung mit einer zeitlich aufgelösten Energiemenge eines Teilnehmers, sei es Einspeisung oder Aufnahme elektrischer Energie, durchführen zu können.

Gemäß einem Ausführungsbeispiel wird vorgeschlagen, dass die Zähleinrichtung als SLP- oder RLM-Zähler gebildet ist. Ein SLP-Zähler ist ein Standartlastprofilzähler und ein RLM-Zähler ist ein registrierender Leistungsmessungszähler. An einem SLP-Zähler kann eine zeitliche Auflösung des Leistungsflusses nachträglich nicht bestimmt werden, sondern nur eine Energiemenge bestimmt werden. Bei einem RLM-Zähler hingegen kann für einen Beobachtungszeitraum, beispielsweise ein Viertelstunden-Zeitraum, jeweils die Durchschnittsleistung sowie die Energie erfasst wird. Ein RLM-Zähler bietet somit eine zeitliche Auflösung des Leistungsflusses, was für eine spätere Saldierung mit Zählwerten von Leistungsflüssen an einem Teilnehmer genutzt werden kann.

Es ist jedoch auch möglich, dass die Zähleinrichtung als Messsystem, insbesondere als intelligentes Messsystem, eingerichtet ist. Ein solches Messsystem weist einen Messsensor, beispielsweise einen Smart Meter auf, mit dem Leistungen und Leistungsflussrichtungen ermittelt werden können. An den Smart Meter kann ein Messgateway angeschlossen sein. In dem Gateway können zumindest zwei Zählregister gebildet sein, die abhängig von der durch das Messsystem gemessenen Leistungsflussrichtung jeweils getrennt angesprochen werden können. Diese Zählregister bieten eine zeitliche Auflösung der Leistungsflüsse, zumindest in einem Beobachtungszeitraum, beispielsweise einer Viertelstunde, was ebenfalls zu einer Saldierung genutzt werden kann.

Es ist erkannt worden, dass nicht nur eine Saldierung von Energiemengen, sondern beispielsweise auch ein zeitlicher Gleichlauf von Leistungsflüssen mit Hilfe des externen Steuersignals realisiert werden kann. Aus diesem Grunde wird vorgeschlagen, dass das externe Steuersignal eine Momentanleistung vorgibt. Eine Momentanleistung kann dabei Scheinleistung oder aufgelöst Wirk- und Blindleistung oder auch lediglich Wirkleistung angeben. Die Steuereinrichtung kann den Leistungsfluss zwischen dem Energiespeicher und dem Energiespeicheranschluss entsprechend der vorgegebenen Momentanleistung einstellen. Dies kann insbesondere durch Ansteuerung des Umrichters und entsprechender Einstellung des Spannungsniveaus erfolgen. Abhängig von dem Spannungsniveau sowie dem inneren Widerstand des Umrichters kann sich eine Stromstärke einstellen, welche den Betrag der Momentanleistung mit bestimmt.

Gemäß einem Ausführungsbeispiel wird vorgeschlagen, dass die Momentanleistung an einem externen Versorgungsnetzanschluss erfasst wird. Die Momentanleistung kann dabei insbesondere auch durch ein nicht geeichtes Messsystem erfasst und zur Steuerung verwendet werden. Ein externer Versorgungsnetzanschluss ist insbesondere ein Anschluss eines Teilnehmers an das Versorgungsnetz. Der Teilnehmer kann dabei sowohl über einen Hausnetzanschluss eine Last mit dem Versorgungsnetz verbinden als auch über einen Erzeugungseinrichtungsanschluss einen Erzeuger mit dem Versorgungsnetz verbinden. Ein Erzeuger kann eine zuvor beschriebene Erzeugungsanlage sein.

Der Teilnehmer ist bestrebt, die durch seinen Erzeuger erzeugte elektrische Energie möglichst vollständig selbst zu nutzen, um so die oben beschriebene Marge durch den Eigenverbrauch möglichst hoch zu halten. Hierzu wird der gegenständliche Energiespeicher mit dem gegenständlichen System, welcher räumlich getrennt von dem Versorgungsnetzanschluss betrieben werden kann, genutzt.

Im Rahmen einer Speicherfarm ist es für einen Betreiber von Energiespeichern möglich, einer Vielzahl von Teilnehmern das Speichern von eigenproduziertem Strom zu ermöglichen und gleichzeitig deren Eigenverbrauch zu erhöhen. Dies geschieht durch einen Abgleich und/oder eine Saldierung der Leistungsflüsse oder Energiemengen, die am Versorgungsnetzanschluss ausgetauscht werden mit den Leistungsflüssen oder Energiemengen, die am Energiespeicheranschluss ausgetauscht werden.

Nachdem ein Speicher durch eigenproduzierten Strom (Grünstrom) geladen wurde, wird der Eigenverbrauch des Teilnehmers an seinem Hausnetzanschluss dadurch erhöht, dass im Falle einer Leistungsaufnahme an dem Versorgungsnetzanschluss diese Leistungsaufnahme in dem externen Steuersignal durch z. B. die Momentanleistung angezeigt wird und dass die an dem Energiespeicheranschluss dann eingestellte Momentanleistung eine entsprechende Leistungsabgabe ist. Gleiches gilt natürlich auch für den umgekehrten Fall. Wenn Grünstrom produziert wird und durch den Teilnehmer nicht vollständig genutzt wird, erfolgt eine Leistungsabgabe am Versorgungsnetzanschluss an das Versorgungsnetz. Diese Leistungsabgabe ist Grünstrom. Wird durch das Steuersignal eine entsprechende Leistungsaufnahme an dem Energiespeicheranschluss aktiviert, insbesondere zeitgleich, so wird der beim Teilnehmer produzierte Grünstrom zeitgleich in den Speicher eingespeichert und kann anschließend, wie zuvor beschrieben, bei einer Nutzung durch den Teilnehmer als Grünstrom ausgespeichert werden.

In diesem Zusammenhang sei erwähnt, dass erfindungsgemäß eine Leistungssaldierung erfolgt, die sowohl als zeitsynchronisierte Leistungssaldierung als auch als zeitraumsynchronisierte Energiesaldierung durchführbar ist.

Bei der Leistungssaldierung werden die Leistungsflüsse am Energiespeicheranschluss und am Versorgungsnetzanschluss mit jeweils umgekehrten Vorzeichen saldiert zu einem unteren Grenzwert, bevorzugt weniger als 1kW, insbesondere weniger als 100W, bevorzugt um die OW. Das bedeutet, dass sich die Leistungsflüsse jeweils ausgleichen und in Summe eine Leistungsaufnahme auf der einen Seite durch eine Leistungsabgabe auf der anderen Seite gedeckt ist. Sofern technische Leistungsbeschränkungen dem Ziel eines vollständigen Leistungsgleichgewichtes entgegenstehen ist das Ziel, den verbleibenden Saldo im Rahmen der technischer Leistungsbeschränkungen zu minimieren.

Bei einer Energiesaldierung über einen Betrachtungszeitraum wird in dem Betrachtungszeitraum die aufgenommene Energie auf der einen Seite mit der abgegebenen Energie auf der anderen Seite saldiert und eine Differenz einem Grenzwert angenähert, der insbesondere kleiner 1kWh bevorzugt kleiner 0,1kWh, insbesondere kleiner 0,01kWh, bevorzugt um die 0kWh ist. Im Rahmen technischer Leistungsbeschränkungen wird je Saldierungsperiode ein Minimum des Energiesaldos angestrebt.

Wenn zuvor die Rede davon war, dass Leistungsflüsse auf der einen und der anderen Seite saldiert werden oder Energiemengen auf der einen oder anderen Seite saldiert werden, so ist darunter zu verstehen, dass einerseits an dem Versorgungsnetzanschluss Grünstrom eingespeist werden kann und gleichzeitig an dem Energiespeicheranschluss eine dem Grünstrom entsprechende Strommenge aufgenommen werden kann oder andererseits an dem Versorgungsnetzanschluss eine Strommenge aufgenommen werden kann, die der gleichzeitig an dem Energiespeicheranschluss ausgespeicherten Strommenge entspricht. Vereinfachend wird in diesem Fall hier von Grünstrom gesprochen, auch wenn es sich rechtlich um Graustrom handelt, der aus dem ehemaligen Grünstrom entstanden ist. Dies gilt sowohl für zeitsynchrone Leistungen als auch für zeitraumsynchrone Energiemengen.

Wie bereits erläutert, kann eine Zeitsynchronisation der Leistungsflüsse oder auch eine zeitraumspezifische Synchronisation der Energiemengen erfolgen. Für den letztgenannten Fall wird vorgeschlagen, dass das externe Steuersignal eine Energie in einem Betrachtungsintervall vorgibt. Ein Betrachtungsintervall ist insbesondere 1 min, 5 min, 10 min oder eine Viertelstunde. Die Steuereinrichtung stellt den Leistungsfluss zwischen dem Energiespeicher und dem Energiespeicheranschluss dann derart ein, dass zum Ende des Betrachtungsintervalls, die zwischen dem Energiespeicher und dem Energiespeicheranschluss ausgetauschte Energie, der vorgegebenen Energie entspricht. Hierbei kann innerhalb eines Betrachtungsintervalls in einer höheren zeitlichen Auflösung als die Dauer des Betrachtungsintervalls eine Information zu der bisher angefallenen Energie durch das externe Steuersignal vorgegeben werden, sodass im Laufe des Betrachtungsintervalls stets das Ziel eines möglichst guten Angleichens der ausgetauschten Energiemengen am Versorgungsnetzanschluss und am Energiespeicheranschluss erreicht werden kann.

In einem Ausführungsbeispiel werden die Energien messtechnisch erfasst, die bis zu einem Zeitpunkt innerhalb des Betrachtungsintervalls am Energiespeicheranschluss und am Versorgungsnetzanschluss mit dem Versorgungsnetz ausgetauscht worden sind. Abhängig von der Prognose des Energieflusses am Versorgungsnetzanschluss für den verbleibenden Zeitraum innerhalb des aktuellen Betrachtungsintervalls wird von der Steuereinrichtung ein entgegen gerichteter Energiefluss am Energiespeicheranschluss eingestellt. Das Ziel ist die Minimierung des verbleibenden Energiedifferenzsaldos am Ende des Betrachtungsintervalls. Zur nachgelagerten Energieabrechnung ist es erforderlich, dass sowohl am Energiespeicher- wie am Versorgungsnetzanschluss die Energiemengen mit geeigneten Zählmitteln z. B. eichrechtskonform erfasst werden. Für die Steuerung der Energieflüsse kann die Steuereinrichtung vorzugsweise Messwerte dieser Zählmittel verwenden. Die Nutzung von Messwerten anderer nicht geeichter Messgeräte ist in einer Ausführungsform für die Steuerung ebenso möglich.

Gemäß einem Ausführungsbeispiel wird die Energie an einem externen Versorgungsnetzanschluss erfasst.

Zur Optimierung des Eigenverbrauchs muss der zuvor eingespeicherte Grünstrom auch zeitrichtig wieder ausgespeist werden. Um dies zu ermöglichen, wird vorgeschlagen, dass die Energie eine an einem externen Versorgungsnetzanschluss aufgenommene Energie ist und dass die zwischen dem Energiespeicher und dem Energiespeicheranschluss ausgetauschte Energie eine abgegebene Energie ist. Dadurch wird der Energiespeicher im Rahmen technischer Restriktionen in dem gleichen Maße entladen, wie der Teilnehmer elektrische Energie aufnimmt.

Die Energieaufnahme oder der Leistungsfluss bei einer Leistungsaufnahme am Versorgungsnetzanschluss kann größer sein, als die entsprechende Energieabgabe oder der Leistungsfluss bei Leistungsabgabe am Energiespeicheranschluss. Um den Eigenverbrauch bestimmen zu können, wird in einem Ausführungsbeispiel erfasst, welche Energie und/oder Leistung als Grünstrom abgegeben wird, um dies am Versorgungsnetzanschluss in den entsprechenden Zählmittel berücksichtigen zu können.

Gemäß einem Ausführungsbeispiel wird vorgeschlagen, dass ein erstes Zählmittel der ersten Zähleinrichtung abhängig von dem Steuersignal bei einer Leistungsaufnahme aktiviert ist und dass ein zweites Zählmittel der ersten Zähleinrichtung abhängig von dem Steuersignal bei einer Leistungsabgabe aktiviert ist. Somit wird sichergestellt, dass Leistungsaufnahme und Leistungsabgabe durch voneinander getrennte Zählmittel am Energiespeicheranschluss erfasst werden, um anschließend einen Vergleich mit einer Leistungsaufnahme und einer Leistungsabgabe am Versorgungsnetzanschluss durchführen zu können. Hierdurch wird sichergestellt, dass Grünstrom zeitgleich produziert und eingespeist oder ausgespeist und genutzt wird.

Erfindungsgemäß wird vorgeschlagen, dass zwischen einem von dem Energiespeicheranschluss räumlich getrennten, netzseitigen Versorgungsnetzanschluss und einem mit dem Versorgungsnetzanschluss verbundenen hausseitigen Hausverteilnetzanschluss eine zweite Zähleinrichtung angeordnet ist, welche eine zwischen dem Hausverteilnetzanschluss und dem Versorgungsnetzanschluss übertragene elektrische Energie oder einen dem Hausverteilnetzanschluss und dem Versorgungsnetzanschluss Leistungsfluss misst. Diese Zähleinrichtung kann als Haushaltszähler verstanden werden. Die zweite Zähleinrichtung kann entsprechend der obigen Ausführung zu der ersten Zähleinrichtung eingerichtet sein. Abhängig von der gemessenen Energie oder des gemessenen Leistungsflusses kann eine Einstelleinrichtung, die insbesondere im Bereich des Teilnehmers, insbesondere räumlich im Bereich der zweiten Zähleinrichtung angeordnet ist, ein Steuersignal generieren.

Die zuvor erwähnte Steuereinrichtung kann räumlich im Bereich des Energiespeichers oder in Teilen abgesetzt davon in einer Zentrale angeordnet sein. Die Einstelleinrichtung kann räumlich bei dem Teilnehmer, der zweiten Zähleinrichtung, am Versorgungsnetzanschluss oder zumindest in Teilen räumlich davon abgesetzt in einer Zentrale angeordnet sein. Die Zentrale kann die Zählwerte der Zähleinrichtungen oder Messwerte der Messeinrichtungen empfangen und hieraus die entsprechenden Signale generieren. Auch das nachfolgend noch erwähnte Antwortsignal kann durch die Zentrale erstellt werden.

Gemäß einem Ausführungsbeispiel wird vorgeschlagen, dass die zweite Zähleinrichtung zumindest zwei Zählmittel, insbesondere Zählwerke oder Zählregister aufweist. Abhängig von der Leistungsflussrichtung zwischen dem Hausverteilnetzanschluss und dem Versorgungsnetzanschluss kann jeweils eines der zumindest zwei Zählmittel aktiviert sein und das jeweils andere Zählmittel deaktiviert sein. Die Zählmittel der zweiten Zähleinrichtung werden als drittes und viertes Zählmittel beschrieben, um diese gegenüber den ersten und zweiten Zählmitteln der ersten Zähleinrichtung sprachlich abgrenzen zu können.

Um die Energien entsprechend der jeweiligen Leistungsflussrichtungen erfassen zu können, ist ein drittes Zählmittel der zweiten Zähleinrichtung bei einer Leistungsaufnahme zwischen dem Hausverteilnetzanschluss und dem Versorgungsnetzanschluss aktiviert und ein viertes Zählmittel der zweiten Zähleinrichtung ist bei einer Leistungsabgabe zwischen dem Hausverteilnetz und dem Versorgungsnetzanschluss aktiviert. Bevorzugt wird ein Vergleich der Zählwerte zwischen dem ersten Zählmittel und dem vierten Zählmittel sowie dem zweiten Zählmittel und dem dritten Zählmittel durchgeführt. Das erste Zählmittel erfasst eine Leistungsaufnahme an dem Energiespeicher, dem gegenüber eine Leistungsabgabe, erfasst durch das vierte Zählmittel, an dem Versorgungsnetzanschluss steht. Das zweite Zählmittel erfasst eine Leistungsabgange an dem Energiespeicher, dem gegenüber eine Leistungsaufnahme, erfasst durch das dritte Zählmittel, an dem Versorgungsnetzanschluss steht.

Erfolgt eine Leistungsabgabe an dem Versorgungsnetzanschluss, kann dies als Grünstrom gewertet werden. Durch das Steuersignal wird sichergestellt, dass eine entsprechende Menge an Grünstrom in den Energiespeicher eingelagert wird. In Fällen, in denen an dem Versorgungsnetzanschluss Energie aufgenommen wird, erfolgt eine Leistungsaufnahme, die durch das dritte Zählmittel erfasst wird, dem gegenüber eine Leistungsabgabe, erfasst durch das zweite Zählmittel stehen kann, wenn in dem Energiespeicher zuvor Grünstrom eingespeichert wurde.

Die durch das erste Zählmittel gezählte Leistungsaufnahme darf bei einer auf die Leistungen wirkenden Steuerung zur Speicherung von Grünstrom aus der Erzeugungsanlage nicht größer als die durch das vierte Zählmittel gezählte Leistungsabgabe sein und sollte insbesondere identisch, höchstens jedoch mit einer Toleranzmarge von wenigen Watt oder Wattstunden sein. Die durch das zweite Zählmittel erfasste Leistungsabgabe sollte nicht größer als die durch das dritte Zählmittel erfasste Leistungsaufnahme sein, vorzugsweise identisch mit einer Toleranzmarge von wenigen Watt bzw. Wattstunden. Somit wird sichergestellt, dass in den Energiespeicher in dem Betrachtungsintervall ausschließlich Grünstrom eingespeist wird.

Um sicherzustellen, dass der von dem Teilnehmer zur Verfügung gestellte Grünstrom im Rahmen technischer Restriktionen des Speichers auch tatsächlich eingespeichert wird und dass von dem Teilnehmer aufgenommene Energie tatsächlich durch Grünstrom aus dem Energiespeicher gespeist wird, ist es notwendig, dass an dem Teilnehmer eine Information über die tatsächliche Einspeicherung oder Ausspeicherung von Grünstrom aus dem Energiespeicher vorliegt. Aus diesem Grunde wird vorgeschlagen, dass die Steuereinrichtung ein Antwortsignal abhängig von dem tatsächlichen Leistungsfluss zwischen dem Energiespeicheranschluss und dem Energiespeicher ausgibt.

Somit ist es möglich, dass für den Fall das tatsächlich Grünstrom in den Energiespeicher eingespeichert wird und Grünstrom aus dem Energiespeicher ausgespeichert wird, dies durch das dritte und das vierte Zählmittel zu registrieren. Das heißt, dass das dritte und/oder das vierte Zählmittel nur dann zählen, wenn ein Ein- bzw. Ausspeichern von Grünstrom an dem Energiespeicher stattfindet. In einem solchen Fall wird bevorzugt, dass die Zählwerte von erstem und viertem Zählmittel und zweitem und drittem Zählmittel identisch sind. Findet kein Einspeichern von Grünstrom oder Ausspeichern von Grünstrom an dem Energiespeicher statt, kann dies auch durch das Antwortsignal signalisiert sein. In einem solchen Fall können fünfte und sechste Zählmittel an der zweiten Zähleinrichtung aktiviert sein, wohingegen das dritte und das vierte Zählmittel deaktiviert sind.

Das fünfte und das sechste Zählmittel kann dann dafür genutzt werden, entweder das Beziehen von Graustrom zu erfassen oder das Abgeben von Grünstrom zu erfassen, welcher nicht gleichzeitig gespeichert wird, sodass für diesen Grünstrom eine Einspeisevergütung anfällt. Auch kann die Aktivierung der Zählmittel abhängig von dem Steuersignal sein.

Gemäß einem Ausführungsbeispiel wird vorgeschlagen, dass das fünfte Zählmittel der zweiten Zähleinrichtung bei einer Leistungsaufnahme zwischen dem Hausverteilnetzanschluss und dem Versorgungsnetzanschluss aktiviert ist und dass das sechste Zählmittel der zweiten Zähleinrichtung bei einer Leistungsabgabe zwischen dem Hausverteilnetz und dem Versorgungsnetzanschluss aktiviert ist. Ob eine Leistungsaufnahme oder Leistungsabgabe vorliegt, kann durch das Steuersignal signalisiert sein. Der Teilnehmer ist durch einen Hausverteilnetzanschluss gekennzeichnet, über den einerseits die Erzeugungsanlage über einen Erzeugungseinrichtungsanschluss angeschlossen ist und andererseits der Haushalt bzw. die Last über ein Hausnetzanschluss.

Zur Erfassung, ob Grünstrom der Erzeugungsanlage in das Versorgungsnetz eingespeist wird, kann eine erste Messeinrichtung zwischen dem Hausverteilnetzanschluss und dem Hausnetzanschluss angeordnet sein und eine zweite Messeinrichtung zwischen dem Hausverteilnetzanschluss und dem Erzeugungseinrichtungsanschluss. Mit Hilfe der Messeinrichtungen sind Leistungen messbar. Ein Vergleich der an dem Hausnetzanschluss bezogenen Leistung mit der an der Erzeugungseinrichtung abgegebenen Leistung ermöglicht es, festzustellen, ob Grünstrom an dem Versorgungsnetzanschluss abgegeben wird oder nicht. Gemäß einer Ausführungsform kann auch die Messung der Ströme oder Ströme und Spannungen zur Bestimmung der Leistungsflussrichtung verwendet werden.

Ist die durch die Erzeugungseinrichtung abgegebene Leistung größer als die durch den Hausnetzanschluss aufgenommene Leistung, liegt ein Leistungsüberschuss vor, der zu einem Leistungsfluss von der Erzeugungseinrichtung zu dem Versorgungsnetzanschluss führt und ein Einspeisen von Grünstrom in das Versorgungsnetz bedeutet. In einem solchen Fall kann das Steuersignal dem Energiespeicher bzw. der Steuereinrichtung signalisieren, Grünstrom in den Energiespeicher einzuspeichern. Vorzugsweise erfolgt die Einspeicherung betragsmäßig mit der gleichen Leistung, wie die Leistung in das Versorgungsnetz eingespeist wird.

Ergibt ein Vergleich zwischen der am Hausnetzanschluss bezogenen elektrischen Leistung und der an der Erzeugungseinrichtung abgegebenen elektrischen Leistung, dass die bezogene Leistung größer ist, so bezieht der Hausnetzanschluss elektrische Leistung aus dem Versorgungsnetz. Dass diese elektrische Leistung Grünstrom ist, wird dadurch erreicht, dass in einem solchen Fall durch das Steuersignal signalisiert wird, dass der Energiespeicher zuvor gespeicherten Grünstrom ausspeichern soll. Betragsmäßig ist die Leistung der Ausspeicherung möglichst identisch im Rahmen technischer Restriktionen des Speichers zu der Differenz aus der am Hausverteilnetzanschluss bezogenen Leistung und der am Erzeugungseinrichtungsanschluss abgegebenen elektrischen Leistung.

Um eine zeitrichtige Leistungserfassung zu gewährleisten, haben die erste und die zweite Zähleinrichtung eine gemeinsame Zeitnormale. Hier kann insbesondere eine Zeitsynchronisierung über einen Zeitserver erfolgen. Die Steuereinrichtung und die Einstelleinrichtung sind zu bidirektionalen Kommunikation eingerichtet, sodass sowohl Steuersignal als auch Antwortsignal austauschbar sind. Ein weiterer Aspekt ist ein Verfahren nach Anspruch 15, dass mit allen zuvor beschriebenen Merkmalen kombinierbar ist.

Nachfolgend wird der Gegenstand anhand einer Ausführungsbeispiele zeigenden Zeichnung näher erläutert. In der Zeichnung zeigen:
- Fig. 1: ein System zum Betreiben eines Energiespeichers;
- Fig. 2a, b: verschiedene Zähleinrichtungen gemäß Ausführungsbeispielen.

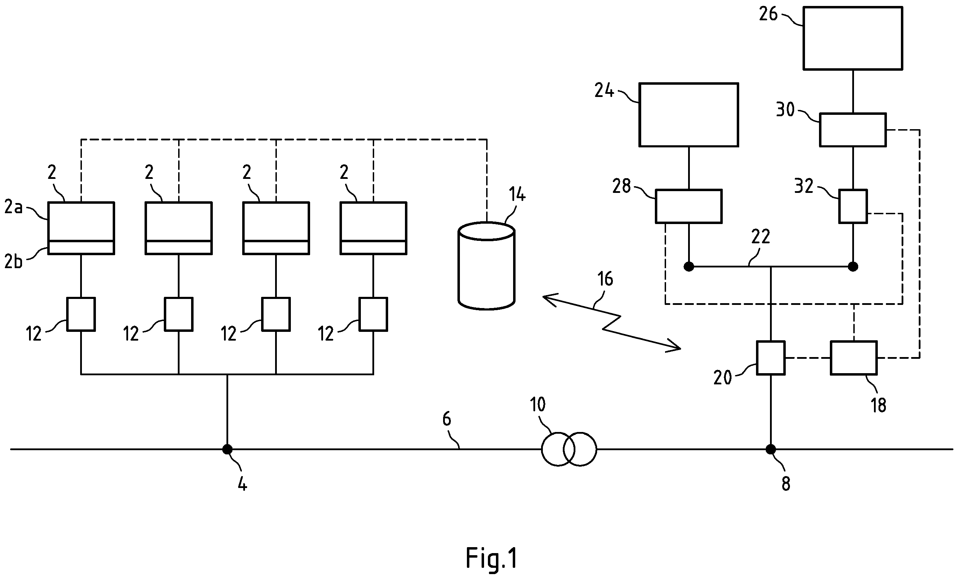

Fig. 1 zeigt ein System mit Energiespeichern 2, welche über einen Energiespeicheranschluss 4 an ein Versorgungsnetz 6 angeschlossen sind. In der Fig. 1 ist der Energiespeicheranschluss 4 beispielhaft in einer anderen Netzebene als ein Versorgungsnetzanschluss 8, wobei die beiden Netzebenen über zumindest einen Transformator 10 miteinander verbunden sind. Die Netzebene des Energiespeicheranschlusses kann die Mittelspannungsebene sein und die Netzebene des Versorgungsnetzanschlusses kann die Niederspannungsebene sein. Dies ist jedoch entbehrlich und der Transformator 10 kann entfallen, so dass Energiespeicheranschluss 4 und Versorgungsnetzanschluss 8 in einer selben Netzebene, insbesondere in der Niederspannungsnetzebene angeordnet sind. Auch können Energiespeicheranschluss 4 und Versorgungsnetzanschluss 8 in verschiedenen Netzbereichen, an verschiedenen Verteilsträngen oder einem selben Verteilstrang innerhalb einer gleichen Versorgungsnetzebene angeordnet sein. Damit ist es auch möglich, dass zwischen dem Energiespeicheranschluss 4 und dem Versorgungsnetzanschluss 8 weitere Netzebenen, beispielsweise die Mittelspannungsebene, genutzt werden, obwohl Energiespeicher- und Versorgungsnetzanschluss in der gleichen Netzebene, beispielsweise der Niederspannung, angeschlossen sind.

Über den Energiespeicheranschluss 4 kann ein Energiespeicher 2 angeschlossen sein. Rein beispielhaft und nur gemäß eines vorteilhaften Ausführungsbeispiels, welches nachfolgend nicht beschränkend zu verstehen ist, ist der Energiespeicher 2 als Teil einer Speicherfarm mit mehreren Energiespeichern 2 gebildet. Der Energiespeicher 2 ist über eine erste Zähleinrichtung 12 mit dem Energiespeicheranschluss 4 verbunden.

Jeweils einer der Energiespeicher 2 mit einer jeweiligen Zähleinrichtung 4 kann genau einem Versorgungsnetzanschluss 8 zugeordnet werden. Nachfolgend wird lediglich ein einzelner Energiespeicher 2 mit einer Zähleinrichtung 12 betrachtet. Die Ausführungen gelten für Speicherfarmen ebenso wie für einzelne Energiespeicher 2.

Der Energiespeicher 2 wird über eine Steuereinrichtung 14, 2b angesteuert. Die Steuereinrichtung 14 kann räumlich im Bereich des Energiespeichers 2 angeordnet sein oder räumlich davon getrennt, beispielsweise in einer Zentrale. Auch eine verteilte Anordnung der Steuereinrichtung 14 an dem Energiespeicher 2 als auch einer Zentrale ist möglich.

Die Steuereinrichtung 14 steht in bidirektionaler Kommunikationsverbindung 16 mit einer Einstelleinrichtung 18 an dem Versorgungsnetzanschluss 8. Die Einstelleinrichtung 18 kann ebenfalls unmittelbar räumlich an dem Versorgungsnetzanschluss 8 oder vollständig oder zumindest teilweise räumlich davon getrennt in einer Zentrale angeordnet sein.

Einzelne oder alle Funktionen der Steuereinrichtung 14 als auch der Einstelleinrichtung 18 können in der Zentrale realisiert sein. Durch Fernwirktechnik kann der Energiespeicher 2 als auch die Messtechnik an dem Versorgungsnetzanschluss 18, welche nachfolgend noch beschrieben wird, betrieben werden.

Der Energiespeicher 2 verfügt über die eigentlichen Speicherzellen 2a und einen Umrichter 2b. Es versteht sich, dass die Speicherzellen 2a auch räumlich getrennt von dem Umrichter 2b angeordnet sein können. Der Umrichter 2b ermöglicht es, versorgungsnetzseitige Wechselspannung in speicherseitige Gleichspannung und speicherseitige Gleichspannung in versorgungsnetzseitige Wechselspannung zu wandeln. Der Umrichter 2b kann als Teil der Steuereinrichtung 14 verstanden werden. Der Umrichter wird abhängig von einem Steuersignal, dass in der Steuereinrichtung 14 empfangen wird, angesteuert.

Der Umrichter 2b ermöglicht die Einstellung eines Spannungsniveaus, sodass über den Umrichter 2b eine Leistungsflussrichtung einstellbar ist. Wird die Spannung größer als die Spannung des Versorgungsnetzes 6 gewählt, so fließt elektrische Leistung von dem Energiespeicher 2 zu dem Energiespeicheranschluss 4. Wird die Spannung niedriger als die Versorgungsnetzspannung des Versorgungsnetzes 6 gewählt, so fließt elektrische Leistung von dem Energiespeicheranschluss 4 zu dem Energiespeicher 2. Dies ist relevant für die nachfolgende Betrachtung.

Am Versorgungsnetzanschluss 8 kann ein zweiter Zähler 20 angeordnet sein. Ein Hausverteilnetzanschluss 22 kann über den zweiten Zähler 20 mit dem Versorgungsnetzanschluss 8 verbunden sein.

An dem Hausnetzverteilnetzanschluss 22 kann ein Hausnetz 24, welches eine ausschließliche elektrische Last darstellen kann, angeschlossen sein. Ferner kann an dem Hausverteilnetzanschluss 22 eine Erzeugungsanlage 26 angeschlossen sein. Optional kann zwischen dem Hausnetz 24 und dem Hausverteilnetzanschluss 22 eine erste Messeinrichtung 28 angeordnet sein. Auch optional kann zwischen dem Hausverteilnetz 22 und der Erzeugungsanlage 26 eine zweite Messeinrichtung 30 angeordnet sein.

Darüber hinaus kann optional zwischen dem Hausverteilnetzanschluss 22 und der Erzeugungsanlage 26 ein dritter Zähler 32 angeordnet sein.

Die Messeinrichtung 28, 30 sowie der zweite Zähler 20 und der dritte Zähler 32 können in einer Kommunikationsverbindung mit der Einstelleinrichtung 18 sein.

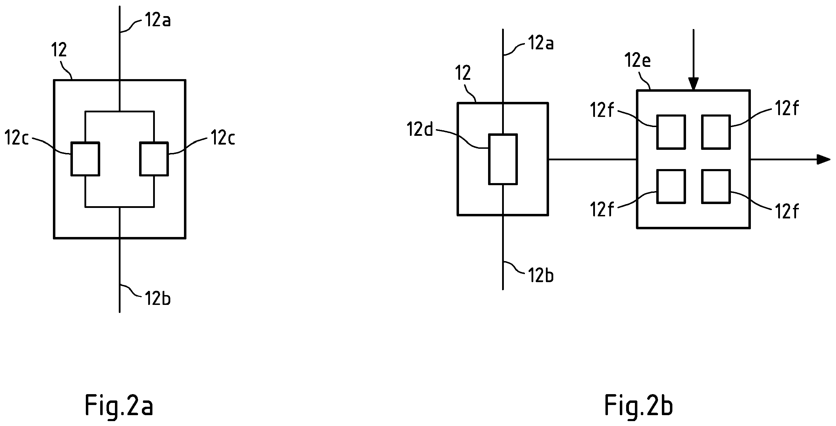

Die Zähler 12, 20, 32 können jeweils gemäß einer Anordnung gemäß Fig. 2a gebildet sein. Beispielhaft wird ein Zähler 12 gezeigt, der einen Eingang 12a sowie einen Ausgang 12b aufweist. In dem Zähler 12 sind zumindest zwei Zählwerke 12c angeordnet. Die Zählwerke 12c können mit Rücklaufsperren versehen sein und beispielsweise jeweils eine Energie in nur einer Leistungsflussrichtung messen. Bei einem Leistungsfluss vom Eingang 12a zum Ausgang 12b kann beispielsweise ein erstes Zählwerk 12c aktiviert sein und beim Leistungsfluss von dem Ausgang 12b zu dem Eingang 12a kann ein zweites Zählwerk 12c aktiviert sein. Die Aktivierung der Zählwerke 12c kann auch extern, beispielsweise abhängig von dem Steuersignal, getriggert durch die Steuereinrichtung 14, erfolgen.

Fig. 2b zeigt ein weiteres Ausführungsbeispiel eines Zählers 12, der als intelligentes Messsystem gebildet ist. Zwischen einem Eingang 12 a und einem Ausgang 12b kann ein Messsensor 12d angeordnet sein, der eine Leistung und/oder elektrische Energie sowie eine Leistungsflussrichtung erfasst. Der Zähler 12 kann ein sogenanntes Smart Meter sein, welches in einer Kommunikationsverbindung mit einem Gateway 12e verbunden ist. In dem Gateway 12e können mehrere Zählwerke, beispielsweise Zählregister 12f angeordnet sein. Die Zählregister 12f können beispielsweise abhängig von einer Leistungsflussrichtung, die durch den Messsensor 12d gemessen wurde angesteuert werden. Auch ist es möglich, dass die Zählregister 12f abhängig von einem externen Signal aktiviert werden.

Nachfolgend wird der Betrieb eines Energiespeichers 12 anhand verschiedener Ausführungsbeispiele beschrieben.

Eine zeitgenaue Leistungsmessung im Bereich des Hausverteilnetzanschlusses 22 kann durch die Messeinrichtung 28 und 30 und/oder den zweiten Zähler 20 erfolgen. Zunächst wird die Leistungsmessung beschrieben.

Sind die Messeinrichtungen 28, 30 vorhanden, so kann durch die Messeinrichtung 28 eine Leistungsflussrichtung gemessen werden. Elektrische Leistung kann von dem Hausverteilnetz 22 zu dem Hausnetz 24 fließen. Zwar ist es auch möglich, dass eine elektrische Leistung von dem Hausnetz 24 zu dem Hausverteilnetzanschluss 22 fließen kann, jedoch ist dies nur dann möglich, wenn unerlaubterweise in dem Hausnetz 24 eine Erzeugungseinrichtung betrieben wird. Ein solcher Fall wird nachfolgend nicht näher betrachtet, da angenommen wird, dass alle Erzeugungsanlagen 26 wie dargestellt getrennt an dem Hausverteilnetzanschluss 22 angeschlossen sind. Die elektrische Leistung (nachfolgend auch erste Leistung genannt), die durch die Messeinrichtung 28 gemessen wird, entspricht dem Bezug an elektrischer Leistung des Hausnetzes 24.

Die Messeinrichtung 30 kann eine Leistung, die von der Erzeugungsanlage 26 zu dem Hausverteilnetzanschluss 22 fließt, messen. Ein Eigenverbrauch der Erzeugungsanlage 26, führt zu einem Leistungsfluss von dem Hausnetzverteilanschluss 22 zu dem der Erzeugungsanlage 26. Die elektrische Leistung (nachfolgend auch zweite Leistung genannt), die durch die Messeinrichtung 30 gemessen wird, entspricht der Bereitstellung an elektrischer Leistung am Hausverteilnetzanschluss 22.

Von der zweiten Leistung, die durch die Messeinrichtung 30 gemessen wird kann die erste Leistung abgezogen werden, die durch die Messeinrichtung 28 gemessen wird.

Ist diese Differenz >0 so speist der Teilnehmer über den Hausnetzverteilanschluss 22 elektrische Leistung in das Versorgungsnetz über den Versorgungsnetzanschluss 8 ein. Eine solche Einspeisung ist Grünstromeinspeisung.

Die zuvor beschriebene Differenz wird zeitgenau erfasst und eine Information über diese Momentanleistung über die Kommunikationsverbindung als Steuersignal von der Einstelleinrichtung 18 an die Steuereinrichtung 14 übermittelt. Die Steuereinrichtung 14 erfasst so zeitgenau die Leistung des Grünstroms, der am Versorgungsnetzanschluss 8 eingespeist wird. Entsprechend dieser kommunizierten Information zu der Momentanleistung wird der Umrichter 2b an dem Energiespeicher 2 angesteuert, sodass der Energiespeicher 2 im Rahmen der technischen Möglichkeiten möglichst eine exakt gleiche Momentanleistung über den Energiespeicheranschluss 4 von dem Versorgungsnetz 6 bezieht.

Der Betrag der tatsächlich bezogenen Leistung oder die Tatsache, dass eine exakt identische Leistung bezogen wurde, kann als Antwortsignal von der Steuereinrichtung 14 an die Einstelleinrichtung 18 kommuniziert werden. Dieses Antwortsignal kann dazu genutzt werden, dass ein viertes Zählmittel 12f aktiviert wird, welches eine Leistungsabgabe von Grünstrom misst, der durch den Energiespeicher 2 ausgenommen wurde. Kann der Energiespeicher 2, aus welchem Grund auch immer, den eingespeisten Grünstrom nicht einspeichern, so kann dies in dem Antwortsignal ebenfalls signalisiert werden. In einem solchen Fall kann durch die Einstelleinrichtung 18 ein sechstes Zählmittel 12f aktiviert werden, welches die normale Einspeisung von Grünstrom misst, anhand dessen eine Einspeisevergütung berechnet werden kann.

Auch ist es möglich, dass eine Differenz aus der Leistung an der Messeinrichtung 30 und der Leistung an der Messeinrichtung 28 negativ ist, das heißt, wenn das Hausnetz 24 mehr elektrische Leistung aufnimmt, als durch die Erzeugungsanlage 26 bereitgestellt wird.

In diesem Fall bezieht der Hausnetzverteilanschluss 22 elektrische Energie aus dem Versorgungsnetz 6 über den Versorgungsnetzanschluss 8. Um in einem solchen Fall die Eigenverbrauchsquote zu erhöhen, wird zeitsynchron eine Information zu einer Momentanleistung, die sich aus der berechneten Differenz ergibt, als Steuersignal, vorzugsweise von der Einstelleinrichtung 18 an die Steuereinrichtung 14 kommuniziert. Die entsprechende Momentanleistung sollte aus dem Energiespeicher 2 in das Versorgungsnetz 6 an am Energiespeicheranschluss 4 eingespeist werden. Daher stellt die Steuereinrichtung 14 den Umrichter 2b des Energiespeichers 2 so ein, dass eine entsprechende Momentanleistung von dem Energiespeicher 2 an dem Energiespeicheranschluss 4 zur Verfügung gestellt wird. Ist dies möglich, wird dies in dem Antwortsignal der Einstelleinrichtung 18 signalisiert, woraufhin diese ein drittes Zählmittel 12f des Zählers 12 aktiviert. Mit Hilfe dieses dritten Zählmittels 12f ist es möglich, den bezogenen Grünstrom aus dem Energiespeicher 2 zu erfassen und insbesondere die Energie hiervon zu erfassen.

Kann der Energiespeicher nicht die entsprechende Momentanleistung einspeisen, so wird dies ebenfalls in einem Antwortsignal signalisiert und die Einstelleinrichtung 28 kann ein fünftes Zählmittel 12f aktivieren, welches den Bezug von Graustrom misst. Somit misst das dritte Zählmittel die Energie, die als Grünstrom von dem Energiespeicher 2 aufgenommen wird. Das vierte Zählmittel misst die Energie, die als Grünstrom in den Energiespeicher 2 eingespeichert wird. Das fünfte Zählmittel misst die Energie, die als Graustrom aus dem Versorgungsnetz 6 bezogen wird. Das sechste Zählmittel misst die Energie, die als Grünstrom in das Versorgungsnetz eingespeist wird, ohne in den Energiespeicher 2 eingespeist zu werden.

Die Bestimmung der Leistung durch die Messeinrichtungen 28, 30 kann auch durch den zweiten Zähler 20 durchgeführt werden, wenn dieser zur Leistungsmessung eingerichtet ist. Der Ablauf des Verfahrens ist ansonsten identisch, nur dass der zweite Zähler 20 die berechnete Differenz aus den Leistungsmessungen an den Messeinrichtungen 30, 28, wie oben ersetzt und Leistungen entsprechend eines Leistungsbezugs oder einer Leistungsabgabe bestimmt und in dem Steuersignal mitteilt. Eine entsprechende Ansteuerung der Zählregister 12f kann wie oben beschrieben erfolgen.

Um später zu kontrollieren, ob die Ein- und Ausspeicherung von Grünstrom in den Energiespeicher 2 entsprechend der Erzeugung und dem Bezug am Teilnehmer war, kann ein Vergleich von Zählwerten erfolgen. Hierzu kann in dem ersten Zähler 12 ein erstes Zählwerk 12c eine Leistungsaufnahme durch den Energiespeicher 2 messen und ein zweites Zählwerk 12c eine Leistungsabgabe des Energiespeichers 2 messen. Der Vergleich des ersten Zählwerks mit dem vierten Zählregister ermöglicht es, festzustellen, ob die abgegebene Energiemenge des Grünstroms an dem Versorgungsnetzanschluss 8 der gespeicherten Energiemenge in dem Energiespeicher 2 entspricht. Ein Vergleich des Zählwerts des zweiten Zählwerts 12c mit dem dritten Zählregister 12f ermöglicht es, festzustellen, ob der bezogene Grünstrom an dem Versorgungsnetzanschluss 8 auch durch den Speicher 2 abgegeben wurde.

Neben der leistungsrichtigen Ansteuerung des Energiespeichers 2 ist auch eine energierichtige Ansteuerung möglich. Hierzu werden nicht Leistungsmomentanwerte gemessen, sondern es wird vorgeschlagen, dass durch den zweiten Zähler 20 in definierten Betrachtungszeiträumen, beispielsweise 1 min, 5 min oder 15 min, Energiewerte bestimmt werden. Hierzu kann beispielsweise ein drittes Zählregister 12f eine Leistungsaufnahme an dem Versorgungsnetzanschluss 8 messen und ein viertes Zählregister 12f eine Leistungsabgabe an dem Versorgungsnetzanschluss 8 messen. Im Falle einer Leistungsabgabe kann ein Leistungswert in dem Betrachtungszeitraum durch das vierte Zählregister 12f signalisiert werden und das entsprechende Steuersignal bewirkt, dass die Steuereinrichtung 14 (über den Umrichter 2b) an dem Energiespeicher 12 bewirkt, dass in dem entsprechenden Zeitraum der Energiespeicher 2 möglichst die gleiche Energiemenge aufnimmt. Diese Leistungsaufnahme kann durch das erste Zählmittel 12c gemessen werden. Anschließend, das heißt am Ende eines Betrachtungszeitraums, können die gemessenen Energiewerte des vierten Zählregisters 12f und des ersten Zählmittels 12c verglichen werden. Die Änderung der gemessenen Energiemenge müsste identisch sein, wenn der Energiespeicher 2 die eingespeiste Energie vollständig aufgenommen hat.

Im Falle einer Energieaufnahme durch den Hausnetzverteilanschluss 22 kann das dritte Zählregister 12f aktiviert sein und einen Zählwert entsprechend einer Energiemenge in dem Betrachtungszeitraum erfassen. Dieser Zählwert wird als Steuersignal an die Steuereinrichtung 14 übermittelt. Diese bewirkt über den Umrichter 2b, dass der Energiespeicher 2 entsprechend entladen wird. Bei einem Entladen kann ein zweites Zählmittel 12c des Zählers 12 aktiviert sein. Zum Ende des Betrachtungszeitraums muss die Veränderung der Zählwerte des zweiten Zählmittels 12c und des dritten Zählregisters 12f identisch sein, wenn die gesamte bezogene Energiemenge durch den Energiespeicher 2 zur Verfügung gestellt wurde.

Mit Hilfe der gezeigten Anordnung ist es möglich, eine exakt richtige Leistungssteuerung und/oder eine Steuerung von Energiemengen in einem Betrachtungszeitraum zu ermöglichen, so dass erzeugter Grünstrom in einem Energiespeicher gespeichert wird und bedarfsweise durch den Energiespeicher zur Verfügung gestellt wird.

### Bezugszeichenliste

- 2: Energiespeicher
- 4: Energiespeicheranschluss
- 6: Versorgungsnetz
- 8: Versorgungsnetzanschluss
- 10: Transformator
- 12: erster Zähler
- 12a: Eingang
- 12b: Ausgang
- 12c: Zählwerk
- 12d: Messsensor
- 12e: Gateway
- 12f: Zählregister
- 14: Steuereinrichtung
- 16: Kommunikationseinrichtung
- 18: Einstelleinrichtung
- 20: zweiter Zähler
- 22: Hausnetzverteilanschluss
- 24: Hausnetz
- 26: Erzeugungsanlage
- 28, 30: Messeinrichtung
- 32: dritter Zähler

## Patentansprüche

1. System zum Betreiben eines Energiespeichers (2) umfassend:
- einen netzseitigen Energiespeicheranschluss (4) an einem elektrischen Versorgungsnetz (6),
- einen Energiespeicher (2),
- eine zwischen dem Energiespeicheranschluss (4) und dem Energiespeicher (2) angeordnete Steuereinrichtung (14, 2b), wobei
- zwischen dem Energiespeicheranschluss (4) und dem Energiespeicher (2) eine erste Zähleinrichtung (12) angeordnet ist, eingerichtet, eine zwischen dem Energiespeicher (2) und dem Energiespeicheranschluss (4) übertragene elektrische Energie zu messen, und
- zwischen einem von dem Energiespeicheranschluss (4) räumlich getrennten, netzseitigen Versorgungsnetzanschluss (8) und einem mit dem Versorgungsnetzanschluss (8) verbundenen hausseitigen Hausverteilnetzanschluss (22) eine zweite Zähleinrichtung (20) angeordnet ist, eingerichtet, eine zwischen dem Hausverteilnetzanschluss (22) und dem Versorgungsnetzanschluss (8) übertragene elektrische Energie zu messen, und wobei eine Einstelleinrichtung (18) eingerichtet ist, abhängig von der durch die zweite Zähleinrichtung gemessenen Energie ein externes Steuersignal zu generieren,
**dadurch gekennzeichnet,**
- **dass** die Steuereinrichtung (14, 2b) eingerichtet ist, abhängig von dem externen Steuersignal einen Leistungsfluss zwischen dem Energiespeicher (2) und dem Energiespeicheranschluss (4) einzustellen,
- **dass** die erste und die zweite Zählereinrichtung (20) eine gemeinsame Zeitnormale haben, wobei der Leistungsfluss durch die Steuereinrichtung (14, 2b) so eingestellt wird, dass
- eine zeitsynchronisierte Leistungssaldierung oder eine zeitraumsynchronisierte Energiesaldierung erfolgt.

2. System nach Anspruch 1,
**dadurch gekennzeichnet,**
- **dass** die erste Zähleinrichtung (12) zumindest zwei Zählmittel (12c), insbesondere Zählwerke oder Zählregister aufweist und dass abhängig von dem externen Steuersignal oder abhängig von der Leistungsflussrichtung des eingestellten Leistungsflusses jeweils eines der zumindest zwei Zählmittel (12c) aktiviert ist und das jeweils andere Zählmittel deaktiviert ist und/oder
- **dass** ein erstes Zählmittel (12c) der ersten Zähleinrichtung (12) abhängig von dem Steuersignal bei einer Leistungsaufnahme aktiviert wird und dass ein zweites Zählmittel (12c) der ersten Zähleinrichtung (12) abhängig von dem Steuersignal bei einer Leistungsabgabe aktiviert wird.

3. System nach Anspruch oder 2,
**dadurch gekennzeichnet,**
- **dass** die erste Zähleinrichtung (12) als SLP oder RLM Zähler mit zumindest zwei Zählwerken (12c) gebildet ist oder dass die erste Zähleinrichtung (12) als Messsystem mit einem Messsensor (12d), insbesondere einem Smart Meter, und einem damit verbundenen Gateway (12e) gebildet ist, wobei das Gateway (12e) zumindest zwei Zählregister (12f) aufweist.

4. System nach einem der vorangehenden Ansprüche,
**dadurch gekennzeichnet,**
- **dass** das externe Steuersignal eine Momentanleistung vorgibt und dass die Steuereinrichtung (14, 2b) den Leistungsfluss zwischen dem Energiespeicher (2) und dem Energiespeicheranschluss (4) entsprechend der vorgegebenen Momentanleistung einstellt, insbesondere
- **dass** die Momentanleistung an dem externen Versorgungsnetzanschluss (8) erfasst wird.

5. System nach einem der vorangehenden Ansprüche,
**dadurch gekennzeichnet,**
- **dass** die Momentanleistung eine Leistungsaufnahme an dem externen Versorgungsnetzanschluss (8) anzeigt und dass die eingestellte Momentanleistung an dem Energiespeicheranschluss (4) eine Leistungsabgabe ist.

6. System nach einem der vorangehenden Ansprüche,
**dadurch gekennzeichnet,**
- **dass** das externe Steuersignal eine Energie in einem Betrachtungsintervall vorgibt und dass die Steuereinrichtung (14, 2b) den Leistungsfluss zwischen dem Energiespeicher (2) und dem Energiespeicheranschluss (4) derart einstellt, dass zum Ende des Betrachtungsintervalls die zwischen dem Energiespeicher (2) und dem Energiespeicheranschluss (4) ausgetauschte Energie der vorgegebenen Energie entspricht, insbesondere
- **dass** die Energie an dem externen Versorgungsnetzanschluss (8) erfasst wird.

7. System nach einem der vorangehenden Ansprüche,
**dadurch gekennzeichnet,**
- **dass** die Energie eine an dem externen Versorgungsnetzanschluss (8) aufgenommene Energie ist und dass die zwischen dem Energiespeicher (2) und dem Energiespeicheranschluss (4) ausgetauschte Energie eine abgegeben Energie ist.

8. System nach einem der vorangehenden Ansprüche,
**dadurch gekennzeichnet,**
- **dass** die zweite Zähleinrichtung (20) zumindest zwei Zählmittel (12c), insbesondere Zählwerke oder Zählregister aufweist und dass abhängig von der Leistungsflussrichtung zwischen dem Hausverteilnetzanschluss (22) und dem Versorgungsnetzanschluss (8) jeweils eines der zumindest zwei Zählmittel (12f) aktiviert ist und das jeweils andere Zählmittel (12f) deaktiviert ist.

9. System nach einem der vorangehenden Ansprüche,
**dadurch gekennzeichnet,**
- **dass** ein drittes Zählmittel (12f) der zweiten Zähleinrichtung (20) bei einer Leistungsaufnahme zwischen dem Hausverteilnetzanschluss (22) und dem Versorgungsnetzanschluss (8) aktiviert ist und dass ein viertes Zählmittel (12f) der zweiten Zähleinrichtung (20) bei einer Leistungsabgabe zwischen dem Hausverteilnetzanschluss (22) und dem Versorgungsnetzanschluss (8) aktiviert ist, insbesondere
- **dass** die Einstelleinrichtung (18) das dritte Zählmittel (12f) und dass viertes Zählmittel (12f) oder ein fünftes Zählmittel (12f) der zweiten Zähleinrichtung (20) und ein sechstes Zählmittel (12f) der zweiten Zähleinrichtung (20) abhängig von dem Steuersignal und/oder dem Antwortsignal aktiviert.

10. System nach einem der vorangehenden Ansprüche,
**dadurch gekennzeichnet,**
- **dass** die Steuereinrichtung (14) ein Antwortsignal abhängig von dem tatsächlichen Leistungsfluss zwischen dem Energiespeicheranschluss (4) und dem Energiespeicher (2) ausgibt.

11. System nach Anspruchs,
**dadurch gekennzeichnet,**
- **dass** das dritte Zählmittel (12f) der zweiten Zähleinrichtung (20) bei einer Leistungsaufnahme zwischen dem Hausverteilnetzanschluss (22) und dem Versorgungsnetzanschluss (8) aktiviert wird und dass das vierte Zählmittel (12f) der zweiten Zähleinrichtung (20) bei einer Leistungsabgabe zwischen dem Hausverteilnetzanschluss (22) und dem Versorgungsnetzanschluss (8) aktiviert wird.

12. System nach einem der vorangehenden Ansprüche,
**dadurch gekennzeichnet,**
- **dass** ausgehend von dem Hausverteilnetzanschluss (22) zumindest ein Erzeugungseinrichtungsanschluss und ein Hausnetzanschuss angeschlossen sind, wobei
- zwischen dem Hausverteilnetzanschluss (22) und dem Hausnetzanschluss eine erste Messeinrichtung (28) angeordnet ist,
- zwischen dem Hausverteilnetzanschluss (22) und dem Erzeugungseinrichtungsanschluss eine zweiter Messeinrichtung (32) angeordnet ist und
- wobei die Messeinrichtungen (28, 32) elektrische Leistung oder Energie messen und dass die Einstelleinrichtung (18) abhängig von einer Auswertung der gemessenen Leistungen bzw. Energien das Steuersignal generiert.

13. Verfahren zum Betreiben eines Energiespeichers bei dem:
- von einer zwischen einem Energiespeicheranschluss (4) und einem Energiespeicher (2) angeordnete Steuereinrichtung (14, 2b) ein externes Steuersignal empfangen wird und
- abhängig von dem externen Steuersignal ein Leistungsfluss zwischen dem Energiespeicher (2) und dem Energiespeicheranschluss (4) eingestellt wird, wobei
- zwischen dem Energiespeicheranschluss (4) und dem Energiespeicher (2) übertragene elektrische Energie durch eine zwischen dem Energiespeicher (2) und dem Energiespeicheranschluss (4) angeordnete erste Zähleinrichtung (12) gemessen wird,
- eine zwischen dem Hausverteilnetzanschluss (22) und dem Versorgungsnetzanschluss (8) übertragene elektrische Energie durch eine zwischen dem von dem Energiespeicheranschluss (4) räumlich getrennten, netzseitigen Versorgungsnetzanschluss (8) und dem mit dem Versorgungsnetzanschluss (8) verbundenen hausseitigen Hausverteilnetzanschluss (22) angeordnete zweite Zähleinrichtung (20) gemessen wird und ein externes Steuersignal durch eine Einstelleinrichtung (18) abhängig von der gemessenen Energie generiert wird,
**dadurch gekennzeichnet,**
- **dass** durch die Steuereinrichtung (14, 2b) abhängig von dem externen Steuersignal einen Leistungsfluss zwischen dem Energiespeicher (2) und dem Energiespeicheranschluss (4) eingestellt wird,
- **dass** die erste und die zweite Zählereinrichtung (20) eine gemeinsame Zeitnormale haben, und der Leistungsfluss durch die Steuereinrichtung (14, 2b) so eingestellt wird,
- eine zeitsynchronisierte Leistungssaldierung oder eine zeitraumsynchronisierte Energiesaldierung durchgeführt wird.

## Claims

1. System for operating an energy storage device (2) comprising:
- a mains-side energy storage connection (4) to an electrical supply grid (6),
- an energy storage device (2),
- a control device (14, 2b) arranged between the energy storage connection (4) and the energy storage device (2), wherein
- a first metering device (12) is arranged between the energy storage connection (4) and the energy storage device (2), which is arranged to measure an electrical energy transmitted between the energy storage device (2) and the energy storage connection (4), and
- a second metering device (20) is arranged between a mains-side supply grid connection (8), which is spatially separated from the energy storage connection (4), and a house-side domestic distribution network connection (22) connected to the supply grid connection (8), which is arranged to measure an electrical energy transmitted between the domestic distribution network connection (22) and the supply grid connection (8), and a setting device (18) which is arranged to generate an external control signal as a function of the energy measured by the second metering device,
**characterized in that**
- the control device (14, 2b) is set up to adjust a power flow between the energy storage device (2) and the energy storage connection (4) as a function of the external control signal,
- the first and second metering devices (20) have a common time normal, wherein the power flow being set by the control device (14, 2b) in such a way that
- a time-synchronized power balancing or a time period-synchronized energy balancing takes place.

2. System according to claim 1,
**characterized in that**
- the first metering device (12) has at least two counting means (12c), in particular totalizers or counting registers, and **in that**, depending on the external control signal or depending on the power flow direction of the set power flow, a respective one of the at least two counting means (12c) is activated and the respective other metering device is deactivated and/or
- a first counting means (12c) of the first metering device (12) is activated as a function of the control signal in the event of a power input and **in that** a second counting means (12c) of the first metering device (12) is activated as a function of the control signal in the event of a power output.

3. System according to claim or 2,
**characterized in that**
- the first metering device (12) is formed as an SLP or RLM meter with at least two counting means (12c), or **in that** the first metering device (12) is formed as a measuring system with a measuring sensor (12d), in particular a smart meter, and a gateway (12e) connected thereto, the gateway (12e) having at least two counting means (12f).

4. System according to one of the preceding claims,
**characterized in that**
- the external control signal specifies an instantaneous power and **in that** the control device (14, 2b) adjusts the power flow between the energy storage device (2) and the energy storage connection (4) in accordance with the specified instantaneous power, in particular
- the instantaneous power is detected at the external supply grid connection (8).

5. System according to one of the preceding claims,
**characterized in that**
- the instantaneous power indicates a power consumption at the external supply grid connection (8) and that the set instantaneous power at the energy storage connection (4) is a power output.

6. System according to one of the preceding claims,
**characterized in that**
- the external control signal specifies an energy in a monitoring interval and **in that** the control device (14, 2b) adjusts the power flow between the energy storage device (2) and the energy storage connection (4) in such a way that, at the end of the monitoring interval, the energy exchanged between the energy storage device (2) and the energy storage connection (4) corresponds to the specified energy, in particular
- the energy is detected at the external supply grid connection (8).

7. System according to one of the preceding claims,
**characterized in that**
- the energy is an energy absorbed at the external supply grid connection (8) and that the energy exchanged between the energy storage device (2) and the energy storage connection (4) is a delivered energy.

8. System according to one of the preceding claims,
**characterized in that**
- the second metering device (20) has at least two counting means (12c), in particular totalizers or counting registers, and **in that**, depending on the power flow direction between the domestic distribution grid connection (22) and the supply grid connection (8), in each case one of the at least two counting means (12f) is activated and the respective other counting means (12f) is deactivated.

9. System according to one of the preceding claims,
**characterized in that**
- a third counting means (12f) of the second metering device (20) is activated when power is consumed between the domestic distribution network connection (22) and the supply grid connection (8), and **in that** a fourth counting means (12f) of the second metering device (20) is activated when power is output between the domestic distribution network connection (22) and the supply grid connection (8), in particular
- the setting device (18) activates the third counting means (12f) and the fourth counting means (12f) or a fifth counting means (12f) of the second metering device (20) and a sixth counting means (12f) of the second metering device (20) as a function of the control signal and/or the response signal.

10. System according to one of the preceding claims,
**characterized in that**
- the control device (14) outputs a response signal depending on the actual power flow between the energy storage connection (4) and the energy storage device (2).

11. System according to claim 8,
**characterized in that**
- the third counting means (12f) of the second metering device (20) is activated at a power consumption between the domestic distribution grid connection (22) and the supply grid connection (8) and that the fourth counting means (12f) of the second metering device (20) is activated at a power output between the domestic distribution grid connection (22) and the supply grid connection (8).

12. System according to one of the preceding claims,
**characterized in that**
- starting from the domestic distribution grid connection (22), at least one generation device connection and one house grid connection are connected, wherein
- a first metering device (28) is arranged between the domestic distribution grid connection (22) and the house grid connection,
- a second metering device (32) is arranged between the domestic distribution grid connection (22) and the generation facility connection, and
- wherein the metering devices (28, 32) measure electrical power or energy and that the setting device (18) generates the control signal depending on an evaluation of the measured power or energy.

13. Method for operating an energy storage device, in which:
- an external control signal is received by a control device (14, 2b) arranged between an energy storage connection (4) and an energy storage device (2), and
- a power flow between the energy storage device (2) and the energy storage connection (4) is set as a function of the external control signal, wherein
- electrical energy transmitted between the energy storage connection (4) and the energy storage device (2) is measured by a first metering device (12) arranged between the energy storage device (2) and the energy storage connection (4),
- an electrical energy transmitted between the domestic distribution grid connection (22) and the supply grid connection (8) is measured by a second metering device (20) arranged between the grid-side supply grid connection (8), which is spatially separated from the energy storage connection (4), and the house-side domestic distribution grid connection (22) connected to the supply grid connection (8), and an external control signal is generated by an setting device (18) as a function of the measured energy,
**characterized in that**
- a power flow between the energy storage device (2) and the energy storage connection (4) is set by the control device (14, 2b) as a function of the external control signal,
- the first and second metering devices (20) have a common time standard, and the power flow is set in this way by the control device (14, 2b),
- a time-synchronized power balancing or a time period-synchronized energy balancing is carried out.

## Revendications

1. Système pour exploiter un accumulateur d'énergie (2) comprenant :
- un raccordement (4) d'accumulateur d'énergie côté réseau à un réseau d'alimentation électrique (6),
- un accumulateur d'énergie (2),
- un dispositif de réglage (14, 2b) disposé entre le raccordement d'accumulateur d'énergie (4) et l'accumulateur d'énergie (2), où
- un premier dispositif de comptage (12) est disposé entre le raccordement d'accumulateur d'énergie (4) et l'accumulateur d'énergie (2), configuré pour mesurer une énergie électrique transmise entre l'accumulateur d'énergie (2) et le raccordement d'accumulateur d'énergie (4), et
- un deuxième dispositif de comptage (20) est disposé entre un raccordement de réseau d'alimentation (8) côté réseau, séparé spatialement du raccordement d'accumulateur d'énergie (4), et un raccordement de réseau de distribution domestique (22) côté maison, relié au raccordement de réseau d'alimentation (8), est configuré pour mesurer une énergie électrique transmise entre le raccordement de réseau de distribution domestique (22) et le raccordement de réseau d'alimentation (8) et un dispositif de réglage (18) est configuré pour générer un signal de réglage externe en fonction de l'énergie mesurée par le deuxième dispositif de comptage,
**caractérisé en ce**
- **que** le dispositif de réglage (14, 2b) est configuré pour régler un flux de puissance entre l'accumulateur d'énergie (2) et le raccordement d'accumulateur d'énergie (4) en fonction du signal de réglage externe,
- **que** le premier et le deuxième dispositif de comptage (20) ont une normale temporelle commune, où le flux de puissance est réglé par le dispositif de réglage (14, 2b) de telle sorte que
- un équilibrage de la puissance synchronisé dans le temps ou un équilibrage de l'énergie synchronisé dans l'espace temporel est effectué.

2. Système selon la revendication 1,
**caractérisé en ce**
- **que** le premier dispositif de comptage (12) a au moins deux moyens de comptage (12c), en particulier des compteurs ou des registres de comptage, et que, en fonction du signal de réglage externe ou en fonction du sens du flux de puissance réglé, l'un des au moins deux moyens de comptage (12c) est respectivement activé et l'autre moyen de comptage est respectivement désactivé et/ou
- **qu'**un premier moyen de comptage (12c) du premier dispositif de comptage (12) est activé en fonction du signal de réglage lors d'une consommation de puissance et qu'un deuxième moyen de comptage (12c) du premier dispositif de comptage (12) est activé en fonction du signal de réglage lors d'une fourniture de puissance.

3. Système selon la revendication ou 2,
**caractérisé en ce**
- le premier dispositif de comptage (12) est formé comme un compteur SLP ou RLM avec au moins deux compteurs (12c) ou que le premier dispositif de comptage (12) est formé comme un système de mesure avec un capteur de mesure (12d), en particulier un compteur intelligent, et un gateway (12e) reliée à celui-ci, où le gateway (12e) a au moins deux registres de comptage (12f).

4. Système selon l'une des revendications précédentes,
**caractérisé en ce**
- **que** le signal de réglage externe prédéfinit une puissance instantanée et que le dispositif de réglage (14, 2b) règle le flux de puissance entre l'accumulateur d'énergie (2) et le raccordement d'accumulateur d'énergie (4) en fonction de la puissance instantanée prédéfinie, en particulier
- **que** la puissance instantanée est détectée au niveau du raccordement externe de réseau d'alimentation (8).

5. Système selon l'une des revendications précédentes,
**caractérisé en ce**
- **que** la puissance instantanée indique une puissance consommée au niveau du raccordement externe de réseau d'alimentation (8) et que la puissance instantanée réglée au niveau du raccordement d'accumulateur d'énergie (4) est une puissance fournie.

6. Système selon l'une des revendications précédentes,
**caractérisé en ce**
- **que** le signal de réglage externe prédéfinit une énergie dans un intervalle d'observation et que le dispositif de réglage (14, 2b) règle le flux de puissance entre l'accumulateur d'énergie (2) et le raccordement d'accumulateur d'énergie (4) de telle sorte qu'à la fin de l'intervalle d'observation, l'énergie échangée entre l'accumulateur d'énergie (2) et le raccordement d'accumulateur d'énergie (4) correspond à l'énergie prédéfinie, en particulier,
- **que** l'énergie est détectée au niveau du raccordement externe de réseau d'alimentation (8).

7. Système selon l'une des revendications précédentes,
**caractérisé en ce**
- **que** l'énergie est une énergie consommé au niveau du raccordement externe de réseau d'alimentation (8) et que l'énergie échangée entre l'accumulateur d'énergie (2) et le raccordement d'accumulateur d'énergie (4) est une énergie fournie.

8. Système selon l'une des revendications précédentes,
**caractérisé en ce**
- **que** le deuxième dispositif de comptage (20) a au moins deux moyens de comptage (12c), en particulier des compteurs ou des registres de comptage, et qu'en fonction du sens du flux de puissance entre le raccordement de réseau de distribution domestique (22) et le raccordement de réseau d'alimentation (8), l'un des au moins deux moyens de comptage (12f) est respectivement activé et l'autre moyen de comptage (12f) est respectivement désactivé.

9. Système selon l'une des revendications précédentes,
**caractérisé en ce**
- **qu'**un troisième moyen de comptage (12f) du deuxième dispositif de comptage (20) est activé lors d'une consommation de puissance entre le raccordement de réseau de distribution domestique (22) et le raccordement de réseau d'alimentation (8) et qu'un quatrième moyen de comptage (12f) du deuxième dispositif de comptage (20) est activé lors d'une fourniture de puissance entre le raccordement de réseau de distribution domestique (22) et le raccordement de réseau d'alimentation (8), en particulier
- **que** le dispositif de réglage (18) active le troisième moyen de comptage (12f) et le quatrième moyen de comptage (12f) ou un cinquième moyen de comptage (12f) du deuxième dispositif de comptage (20) et un sixième moyen de comptage (12f) du deuxième dispositif de comptage (20) en fonction du signal de réglage et/ou du signal de réponse.

10. Système selon l'une des revendications précédentes,
**caractérisé en ce**
- **que** le dispositif de réglage (14) émet un signal de réponse en fonction du flux de puissance véritable entre le raccordement d'accumulateur d'énergie (4) et l'accumulateur d'énergie (2).

11. Système selon la revendication 8,
**caractérisé en ce**
- **que** le troisième moyen de comptage (12f) du deuxième dispositif de comptage (20) est activé lors d'une consommation de puissance entre le raccordement de réseau de distribution domestique (22) et le raccordement de réseau d'alimentation (8) et que le quatrième moyen de comptage (12f) du deuxième dispositif de comptage (20) est activé lors d'une fourniture de puissance entre le raccordement de réseau de distribution domestique (22) et le raccordement de réseau d'alimentation (8).

12. Système selon l'une des revendications précédentes,
**caractérisé en ce**
- **qu'**à partir du raccordement de réseau de distribution domestique (22), au moins un raccordement de dispositif de production et un raccordement de réseau domestique sont raccordés, où
- un premier dispositif de mesure (28) est disposé entre le raccordement de réseau de distribution domestique (22) et le raccordement de réseau domestique,
- un deuxième dispositif de mesure (32) est disposé entre le raccordement de réseau de distribution domestique (22) et le raccordement de dispositif de production et
- où les dispositifs de mesurent (28, 32) mesurent de la puissance ou de l'énergie électrique et que le dispositif de réglage (18) génère le signal de réglage en fonction d'une évaluation des puissances ou énergies mesurées.

13. Procédé pour exploiter un accumulateur d'énergie dans lequel :
- un signal de réglage externe est reçu par un dispositif de réglage (14, 2b) disposé entre un raccordement l'accumulateur d'énergie (4) et un accumulateur d'énergie (2), et
- en fonction du signal de réglage externe, un flux de puissance est réglé entre l'accumulateur d'énergie (2) et le raccord d'accumulateur d'énergie (4), où
- de l'énergie électrique transmise entre le raccordement d'accumulateur d'énergie (4) et l'accumulateur d'énergie (2) est mesurée par un premier dispositif de comptage (12) disposé entre l'accumulateur d'énergie (2) et le raccordement d'accumulateur d'énergie (4),
- une énergie électrique transmise entre le raccordement de réseau de distribution domestique (22) et le raccordement de réseau d'alimentation (8) est mesurée par un deuxième dispositif de comptage (20) disposé entre le raccordement de réseau d'alimentation (8) côté réseau, séparé spatialement du raccordement d'accumulateur d'énergie (4), et le raccordement de réseau de distribution domestique (22) côté maison, relié au raccordement de réseau d'alimentation (8), et un signal de réglage externe est généré par un dispositif de réglage (18) en fonction de l'énergie mesurée,
**caractérisé en ce**
- **qu'**un flux de puissance entre l'accumulateur d'énergie (2) et le raccordement d'accumulateur d'énergie (4) est réglé par le dispositif de réglage (14, 2b) en fonction du signal de réglage externe,
- **que** le premier et le deuxième dispositif de comptage (20) ont une normale de temps commun, et le flux de puissance est réglé de de telle sorte par le dispositif de réglage (14, 2b),
- **qu'**un équilibrage de la puissance synchronisé dans le temps ou un équilibrage de l'énergie synchronisé dans l'espace temporel est effectué.
